(19) Europäisches Patentamt
European Patent Office
Office européen des brevets

(11) **EP 1 173 940 B1**

(12) **EUROPÄISCHE PATENTSCHRIFT**

(45) Veröffentlichungstag und Bekanntmachung des Hinweises auf die Patenterteilung:
**14.12.2005 Patentblatt 2005/50**

(21) Anmeldenummer: **00917059.8**

(22) Anmeldetag: **07.04.2000**

(51) Int Cl.[7]: **H04H 1/00**, H04B 7/005

(86) Internationale Anmeldenummer:
**PCT/EP2000/003127**

(87) Internationale Veröffentlichungsnummer:
**WO 2000/065755 (02.11.2000 Gazette 2000/44)**

(54) **VERFAHREN ZUR QUALITÄTSKONTROLLE FÜR DIGITALE RUNDFUNKÜBERTRAGUNG IM MITTEL- UND KURZWELLENBEREICH**

QUALITY CONTROL METHOD FOR DIGITAL RADIO TRANSMISSIONS IN THE MEDIUM AND SHORT WAVE RANGE

PROCEDE DE CONTROLE DE QUALITE POUR DES RADIOTRANSMISSSIONS NUMERIQUES EN ONDES MOYENNES ET ONDES COURTES

(84) Benannte Vertragsstaaten:
**AT BE CH CY DE DK ES FI FR GB GR IE IT LI LU MC NL PT SE**

(30) Priorität: **22.04.1999 DE 19918829**

(43) Veröffentlichungstag der Anmeldung:
**23.01.2002 Patentblatt 2002/04**

(73) Patentinhaber: **Deutsche Telekom AG**
**53113 Bonn (DE)**

(72) Erfinder: **RUDOLPH, Dietmar**
**D-14163 Berlin (DE)**

(56) Entgegenhaltungen:
**WO-A-90/04889          WO-A-98/43455**
**WO-A-99/07105          FR-A- 2 757 725**

• **SENGER P: "DRM - DIGITAL RADIO MONDIALE EIN WELTWEITES KONSORTIUM FUER EINEN NEUEN DIGITALEN STANDARD" RUNDFUNKTECHNISCHE MITTEILUNGEN,DE,MENSING. NORDERSTEDT, Bd. 43, Nr. 1, März 1999 (1999-03), Seiten 29-35, XP000824065 ISSN: 0035-9890**

**Beschreibung**

Die Erfindung betrifft das Gebiet der Qualitätskontrolle für digitale Rundfunkübertragungen im Mittel- und Kurzwellenbereich.

Digitale Signalübertragungen haben - wie schon aus dem Begriff digital hervorgeht - die Eigenschaft, daß sie entweder ein praktisch fehlerfreies Audiosignal liefern, oder aber daß das Audiosignal nicht verwendbar ist und der Empfänger auf "stumm" schaltet (muting). Die Qualität des hochfrequenten Empfangssignals bestimmt die Schwelle, oberhalb der die Audioqualität einwandfrei ist und unterhalb der kein Audioempfang möglich ist.

Physikalisch ist dieses Verhalten dadurch begründet, daß die Fehlerkurven für die Bitfehler (oder auch die Symbolfehler) bei einem ansteigenden Verhältnis von empfangener Signalenergie/Geräuschpegel sehr steil abfallen. Das bedeutet praktisch, daß oberhalb einer gewissen Schwelle (L) von Signalenergie/Geräuschpegel die Bitfehlerrate gegen vernachlässigbar kleine Werte geht. Die dann noch verbleibenden Restfehler können vom Audiodecoder korrigiert werden, wodurch eine einwandfreie Audioqualität entsteht

Im Mittelwellen- und noch stärker im Kurzwellenbereich treten ausbreitungsbedingte zeitlich unregelmäßige Schwunderscheinungen (Fading) auf, die u.a. dazu fuhren, daß die empfangene Signalenergie stark abnimmt, und/oder daß der Geräuschpegel stark zunimmt. Dadurch wird die Empfangsschwelle unterschritten, so daß Muting eintritt.

Bei dem digitalen System DRM (Digital Radio Mondial) soll in einem solchen Fall eine unterbrechungsfreie automatische Umschaltung des Empfängers auf die jeweils beste Frequenz erfolgen (siehe SENGER, P.: "DRM - Digital Radio Mondial - Ein weltweites Konsortium für einen neuen digitalen Standard", RUNDFUNKTECENISCHE MITTEILUNGEN, Bd. 43, Nr. 1, März 1999, Seite 33).

Die verbesserte Verfügbarkeit des Dienstes setzt aber voraus, dass dasselbe Programm parallel auf mehreren unterschiedlichen Frequenzen ausgestrahlt wird, was einer guten Frequenzökonomie entgegensteht.

Nach dem Stand der Technik gibt es auch das Konzept der hierarchischen Modulation, um eine "plötzliche Schwelle" aus Sicht des Empfängers zu vermeiden. Hierbei ist der gesendete Datenstrom so aufgebaut, daß der Empfänger für ein großes Signal/Geräusch-Verhältnis den gesamten Datenstrom detektieren kann und für ein abnehmendes Signal/Geräusch-Verhältnis zu einer ersten Schwelle ($L_1$) kommt, ab der nur noch ein Teil des Datenstromes detektierbar ist. Dies ist der "robuste" Teil der Daten, mit deren Hilfe noch eine eingeschränkte Audioqualität erzielbar ist. Nach einer zweiten Schwelle ($L_2$) ist dann der Empfänger wieder stumm (muting). Ein solches Verfahren wird "Graceful Degradation" genannt.

Aus der Sicht der Versorgung ist zu beachten, daß die Schwellwerte sich verhalten wie:

$$L_1 > L > L_2$$

Das bedeutet praktisch, daß bei hierarchischer Modulation der Versorgungsradius ($R_1$) für maximale Audioqualität geringer ausfällt als derjenige (R) bei nicht hierarchischer Modulation. Andererseits ist bei hierarchischer Modulation in einem größeren Versorgungsradius ($R_2$) wenigstens noch der Sender mit eingeschränkter Qualität empfangbar. Für die Versorgungsradien gilt:

$$R_1 < R < R_2$$

Fest definierbare Versorgungsradien gibt es allerdings nur bei der Ausbreitung auf sehr hohen Frequenzen, z.B. ab dem UKW-Bereich. Auf diesen hohen Frequenzen tritt kein totaler Schwund mehr auf, wie er bei Mittel- und Kurzwelle so häufig entsteht.

Die Anwendung einer "Graceful Degradation" im Kurzwellenbereich ist somit umstritten. Einerseits ist eine empfangsseitige Reduzierung der Qualität gegenüber einem vollständigen Muting vorzuziehen, wenn auch auf Kosten von Einschränkungen:

- Versorgungsradius für volle Qualität nimmt ab,
- Datenrate für die Audiodaten kann vom Rundfunksender nicht mehr so flexibel eingestellt werden wie im Falle einer nicht hierarchischen Codierung,
- Steile, länger andauernde Fades bewirken einen extrem kurzen Zeitbereich für die reduzierte Qualität, der sich kaum bemerkbar macht.

Andererseits ist eine hierarchische Codierung/ Modulation im Empfänger teuerer, vor allem muß sie in jedem Empfänger implementiert werden. Das widerspricht dem Konzept vom billigen Empfänger. Eine preisliche Skalierbarkeit der Empfänger- von billig bis "high Quality" - ist vermutlich wichtiger.

Die Erfindung ist wie in Anspruch 1 definiert. Weiterbildungen der Erfindung werden in dem abhängigen Anspruch 2 beschraben.

Als Alternativen zur Graceful Degradation" werden erfindungsgemäß angeboten:

- Vorwahl einer stärkeren Codierung/Modulation für kritische Zielgebiete.
- Verwendung alternativer Sendefrequenzen für das Senden des gleichen Programms, in Verbindung mit einer automatischen Umschaltung.

Zur Beurteilung der realen Empfangssituation ist im Zielgebiet eine Monitorstation erforderlich, von der die Parameter der empfangenen hochfrequenten Signale automatisch an den Rundfunksender gegeben werden. Damit wird "Intelligenz" aus dem Empfänger in den Sender verlagert, was dem Konzept des Rundfunks entspricht.

Die Abfrage der Qualitätsdaten von der Monitorstation kann über das Internet erfolgen. Eine automatische Rückmeldung ist über das Internet ebenfalls möglich. Dieses Feature kann von jeder Rundfunkanstalt selbständig und unabhängig implementiert werden.

Bei Zielgebieten, die keine Monitorstation zulassen, ist es möglich, durch Monitorstationen in angrenzenden Gebieten eine Schätzung für die Ausbreitung zu ermitteln.

**Patentansprüche**

1. Verfahren zur Qualitätskontrolle für digitale Rundfunkübertragungen im Mittel- und Kurzwellenbereich, **dadurch gekennzeichnet,**
   **daß** sich im Zielgebiet oder benachbart dazu mindestens eine Empfangsstation befindet, die die Qualitätsdaten des empfangenen hochfrequenten digitalen Signals auswertet und die zugehörigen Parameterwerte bestimmt,
   **daß** die ermittelten Parameterwerte zum Rundfunksender übertragen werden,
   **daß** die Übertragung der ermittelten Parameterwerte zum Rundfunksender automatisch und über das Internet erfolgt, und
   **daß** die zum Rundfunksender übertragenen Parameterwerte dazu benutzt werden, um die Anzahl der Modulationsstufen und/oder die Codierung der Sendung zu beeinflussen oder alternative Sendefrequenzen zu bestimmen.

2. Verfahren nach Anspruch 1, **dadurch gekennzeichnet, daß** die von der Empfangsstation im Zielgebiet ermittelten und zum Rundfunksender übertragenen Parameterwerte in einer Datenbank für Frequenzprognosen gespeichert werden.

**Claims**

1. Method for quality control for digital radio transmissions in the medium wave and short wave bands, **characterized in that**
   at least one receiving station is located in the target region or adjacent thereto, said receiving station analyzes the quality data of the received high-frequency digital signals and determines the associated parameter values,
   **in that** the parameter values determined are transmitted to the radio transmitter,
   **in that** the transmission of the determined parameter values to the radio transmitter takes place automatically and through the Internet, and **in that** the parameter values transmitted to the radio transmitter are used to influence the number of modulation stages and/or the coding of the transmission, or to determine alternative transmission frequencies.

2. Method according to claim 1, **characterized in that** the parameter values determined by the receiving station in the target region and transmitted to the radio transmitter are stored in a database for frequency forecasts.

**Revendications**

1. Procédé destiné au contrôle de la qualité pour les transmissions de radiodiffusion numériques dans la gamme des ondes moyennes et courtes,
   **caractérisé en ce qu'au** moins une station de réception se trouvant dans la zone visée ou avoisinante exploite les données de qualité du signal numérique à haute fréquence reçu et définit les valeurs des paramètres correspondants,
   que les valeurs déterminées des paramètres sont transmises à l'émetteur de radiodiffusion,
   que la transmission des valeurs déterminées des paramètres vers l'émetteur de radiodiffusion a lieu automatiquement et via Internet et
   que les valeurs des paramètres transmises à l'émetteur de radiodiffusion sont utilisées afin d'influencer le nombre de niveaux de modulation et/ou la codification de l'émission ou de déterminer d'autres fréquences d'émission.

2. Procédé selon la revendication 1,
   **caractérisé en ce que** les valeurs des paramètres déterminées par la station de réception dans la zone visée et transmises à l'émetteur de radiodiffusion sont sauvegardées dans une base de données pour la prévision de fréquences.